# EUROPÄISCHE PATENTANMELDUNG

(11) **EP 2 078 633 A2**
(43) Veröffentlichungstag der Anmeldung: **15.07.2009**
(21) Anmeldenummer: 08170193.0
(22) Anmeldetag: 28.11.2008
(51) Int. Cl.: B60L 15/20

(54) **Schienenfahrzeug mit einer elektrischen Antriebsschaltungsanordnung**

(30) Priorität: 14.01.2008 DE 102008004273
(71) Anmelder: Siemens Aktiengesellschaft, 80333 München (DE)
(72) Erfinder: Augsburger, Friedemann, 90518, Altdorf (DE)

(57) **Zusammenfassung**

Die Erfindung betrifft ein Schienenfahrzeug mit einer elektrischen Antriebsschaltungsanordnung, die verlustleistungsbehaftete Komponenten aufweist, welche entsprechend einer gewünschten Zugkraftkennlinie dimensioniert sind, die durch die Abhängigkeit der von der Antriebsschaltungsanordnung zur Verfügung gestellten Zugkraft von einer Geschwindigkeit des Schienenfahrzeugs definiert ist und bei niedrigeren Geschwindigkeiten bis zu einem ersten Leistungseckpunkt (LE1) einen Verlaufsabschnitt mit allgemein zunehmender Antriebsleistung und bei Geschwindigkeiten jenseits des ersten Leistungseckpunktes (LE1) einen hyperbolischen Verlaufsabschnitt mit konstanter Antriebsleistung aufweist, wobei die Zugkraftkennlinie einen zweiten Leistungseckpunkt (LE2), der bei einer höheren Geschwindigkeit als der erste Leistungseckpunkt (LE1) liegt, aufweist und zwischen dem ersten Leistungseckpunkt (LE1) und dem zweiten Leistungseckpunkt (LE2) einen subhyperbolischen Verlaufsabschnitt mit von dem ersten zu dem zweiten Leistungseckpunkt (LE2) abnehmender Antriebsleistung zeigt, wobei der hyperbolische Verlaufsabschnitt jenseits des zweiten Leistungseckpunktes (LE2) liegt.

## Beschreibung

Die Erfindung bezieht sich auf ein Schienenfahrzeug mit einer elektrischen Antriebsschaltungsanordnung, die verlustleistungsbehaftete Komponenten aufweist, welche entsprechend einer gewünschten Zugkraftkennlinie dimensioniert sind, die durch die Abhängigkeit der von der Antriebsschaltungsanordnung zur Verfügung gestellten Zugkraft von einer Geschwindigkeit des Schienenfahrzeugs definiert ist und bei niedrigeren Geschwindigkeiten bis zu einem ersten Leistungseckpunkt einen Verlaufsabschnitt mit allgemein zunehmender Antriebsleistung und bei Geschwindigkeiten jenseits des ersten Leistungseckpunktes einen hyperbolischen Verlaufsabschnitt mit konstanter Antriebsleistung aufweist.

Bei einem solchen Schienenfahrzeug ist eine Dimensionierung bestimmter Antriebskomponenten in erster Linie von dem hyperbolischen Verlaufsabschnitt abhängig, der sich durch eine maximal mögliche Antriebs- oder Traktionsleistung auszeichnet. So kann beispielsweise die Antriebsschaltungsanordnung für eine maximale Traktionsleistung von 2600 kW ausgelegt sein. In diesem Fall bewirkt die Antriebsschaltungsanordnung zunächst die Bereitstellung einer konstanten Anfahrzugkraft, die beispielsweise 170 kN betragen kann, bis der erste Leistungseckpunkt erreicht ist. Die Kennlinie, der die Steuerung der Antriebsschaltungsanordnung jenseits des ersten Leistungseckpunktes folgt, ist dann durch eine Hyperbel gekennzeichnet, welche in ihrem Verlauf durch die maximale Antriebsleistung von 2600 kW bestimmt ist.

Zusammengefasst ist somit eine beabsichtigte maximal mögliche Traktionsleistung von elektrischen Schienenfahrzeugen über die Zugkraftkennlinie in einem weiten, nämlich einem mittleren bis oberen Geschwindigkeitsbereich über eine sog. Leistungshyperbel mit annähernd konstanter maximaler Leistung definiert.

Bei Schienenfahrzeugen besteht generell die Aufgabe, ihre Komponenten nicht größer zu dimensionieren, als es für den durch sie zu erfüllenden Zweck erforderlich ist. Im Fall von Antriebsschaltungsanordnungen ist es somit wünschenswert, diese aus solchen verlustleistungsbehafteten Komponenten, wie Transformatoren, Drosseln und Fahrmotoren, aufzubauen, dass einerseits eine gewünschte Zugkraft über den gesamten Geschwindigkeitsbereich zur Verfügung steht und andererseits die Komponenten nicht größer dimensioniert sind als erforderlich.

Ausgehend hiervon liegt der Erfindung die Aufgabe zugrunde, ein Schienenfahrzeug mit einer elektrischen Antriebschaltungsanordnung der eingangs genannten Art derart weiterzuentwickeln, dass die Antriebsschaltungsanordnung wirtschaftlicher dimensioniert werden kann.

Diese Aufgabe wird dadurch gelöst, dass die Zugkraftkennlinie einen zweiten Leistungseckpunkt, der bei einer höheren Geschwindigkeit als der erste Leistungseckpunkt liegt, aufweist und zwischen dem ersten Leistungseckpunkt und dem zweiten Leistungseckpunkt einen subhyperbolischen Verlaufsabschnitt mit von dem ersten zu dem zweiten Leistungseckpunkt abnehmender Antriebsleistung zeigt, wobei der hyperbolische Verlaufsabschnitt jenseits des zweiten Leistungseckpunktes liegt.

Aufgrund des subhyperbolischen Verlaufsabschnitts der Zugkraftkennlinie können die verlustleistungsbehafteten Komponenten, wie der Transformator, die Drossel und die Fahrmotoren, für eine vergleichsweise geringere maximale Antriebsleistung ausgelegt sein. Dies spart voraussichtlich sowohl Kosten als auch Gewicht bei diesen Komponenten ein. Dabei wird ausgenutzt, dass diese verlustleistungsbehafteten Komponenten typischer Weise eine hohe thermische Zeitkonstante aufweisen. Diese kann beispielsweise beim Haupttransformator in Wechselspannungsfahrzeugen und bei Netzfilterdrosseln in Gleichspannungsfahrzeugen bei 10 bis über 60 Minuten liegen.

Aufgrund dieser Feststellung wird die Antriebsschaltungsanordnung im Bereich des ersten Leistungseckpunktes mit einer Leistung betrieben, die oberhalb der Antriebsleistung des hyperbolischen Verlaufsabschnitts jenseits des zweiten Leistungseckpunktes liegt. Dies führt sicherlich zu einer Erwärmung der Komponenten, die jedoch in Kauf genommen werden kann.

Bevorzugt ist die Antriebschaltungsanordnung für eine Beschleunigung des Schienenfahrzeugs derart gesteuert, dass ein Geschwindigkeitsbereich um den ersten Leistungseckpunkt der Zugkraftkennlinie herum in einer solchen Zeit durchfahren wird, dass die verlustleistungsbehafteten Komponenten nicht überhitzt werden. Anders ausgedrückt, soll vermieden werden, dass die Antriebsschaltungsanordnung über einen zu langen Zeitraum mit "überhöhter" Antriebsleistung betrieben wird. Sobald eine Geschwindigkeit erreicht ist, die oberhalb des zweiten Leistungseckpunktes liegt, besteht keine Gefahr mehr, dass die Komponenten überhitzt werden können.

Vorteilhafterweise kann für den Geschwindigkeitsbereich um den ersten Leistungseckpunkt der Zugkraftkennlinie herum eine Zugkraftbegrenzungseinrichtung vorgesehen sein, welche unterhalb von Abschalttemperaturen der verlustleistungsbehafteten Komponenten der Antriebsschaltungsanordnung wirksam wird.

Dies stellt eine günstige und für einen Betrieb der Fahrzeuge verträgliche Sicherung der verlustleistungsbehafteten Komponenten gegen Überhitzung zur Verfügung.

Ein Ausführungsbeispiel der Erfindung wird nachfolgend unter Bezugnahme auf die Zeichnung noch näher erläutert. Es zeigen:
- Figur 1: eine grafische Darstellung einer Zugkraftkennlinie für eine Antriebsschaltungsanordnung eines Schienenfahrzeugs nach dem Stand der Technik,
- Figur 2: eine grafische Darstellung einer Zugkraftkennlinie eines Schienenfahrzeugs und
- Figur 3: eine schematische Schaltungsanordnung zur Steuerung einer Antriebsleistung für ein Schienenfahrzeug.

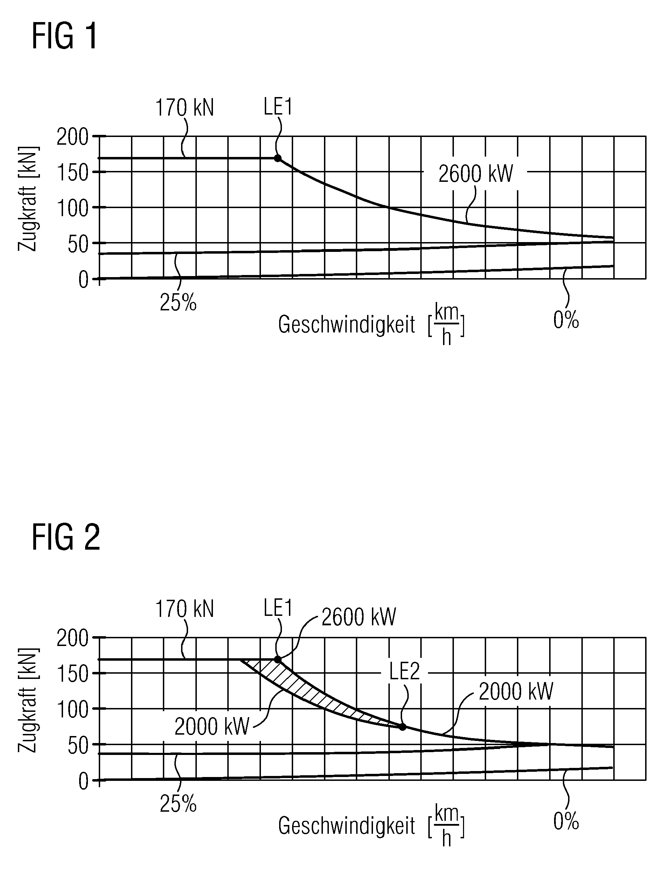

Figur 1 ist der Verlauf einer Zugkraftkennlinie bei einem bekannten Schienenfahrzeug entnehmbar. Die Antriebsschaltungsanordnung ist bei diesem Ausführungsbeispiel für eine maximale Antriebsleistung von 2600 kW ausgelegt. Entsprechend dimensioniert sind verlustleistungsbehaftete Komponenten, wie Transformatoren, Drosseln und Fahrmotoren. Solche verlustleistungsbehafteten Komponenten haben relative hohe thermische Zeitkonstanten, die bei einem Haupttransformator in Wechselspannungsfahrzeugen beispielsweise bei 10 bis 60 Minuten liegt.

Der Verlauf der Zugkraftkennlinie nach Figur 1 zeigt zunächst einen ersten Verlaufsabschnitt mit allgemein zunehmender Antriebsleistung und im Wesentlichen konstanter Zugkraft, und zwar bis zu einem ersten Leistungseckpunkt LE1. Bis zu der zugehörigen Geschwindigkeit beträgt die Anfahrzugkraft im vorliegenden Ausführungsbeispiel 170 kN. In einem zweiten Verlaufsabschnitt der Zugkraftkennlinie liegt eine hyperbolische Form vor, die dadurch gekennzeichnet ist, dass, unabhängig von einer gerade erreichten Geschwindigkeit bei einer Beschleunigung des Schienenfahrzeugs, eine maximale Antriebsleistung von 2600 kW von der Antriebsschaltungsanordnung bereitgestellt wird.

Ausgehend von dieser bekannten Zugkraftkennlinie werden nunmehr die Unterschiede der neuen Zugkraftkennlinie erläutert. Gemäß Figur 2 sind die verlustleistungsbehafteten Komponenten der Antriebsschaltkreisanordnung für eine geringere maximale Antriebsleistung, nämlich für eine Leistung von 2000 KW bemessen. Aufgrund dessen ist es möglich, beispielsweise den Haupttransformator vergleichsweise geringer zu dimensionieren, wodurch auch Kosten eingespart werden können.

Der erste Verlaufsabschnitt der Zugkraftkennlinie nach Figur 2 entspricht demjenigen der Zugkraftkennlinie von Figur 1, d.h., auch hier liegt eine konstante Anfahrzugkraft von 170 kN bis zum Erreichen der Geschwindigkeit für den ersten Leistungseckpunkt LE1 vor.

In einem sich daran anschließenden zweiten Verlaufsabschnitt der Zugkraftkennlinie ab dem ersten Leistungseckpunkt LE1 zu höheren Geschwindigkeiten hin, liegt ein subhyperbolischer Kurvenverlauf vor. Der zweite Verlaufsabschnitt der Zugkraftkennlinie endet auf seiner Seite mit hohen Geschwindigkeiten in einem zweiten Leistungseckpunkt LE2, von dem aus der Kurvenverlauf wiederum hyperbolisch ist, und zwar für eine maximale Antriebsleistung von 2000 kW. Zu Erläuterungszwecken ist die Hyperbel für die maximale Antriebsleistung von 2000 kW in der Figur 2 auch zu niedrigeren Geschwindigkeiten so weit als Hilfslinie durchgezogen, bis der erste Verlaufsabschnitt mit konstanter Zugkraft erreicht wird.

Daraus wird ersichtlich, dass ab dem Schnittpunkt der Hilfslinie für die maximale Antriebsleistung von 2000 kW bis zum zweiten Leistungseckpunkt LE2 ein grundsätzlich anderer Betrieb der Antriebschaltkreisanordnung vorliegt, als bei der Auslegung nach Figur 1.

Ab dem Schnittpunkt der Hilfslinie mit dem ersten Verlaufsabschnitt bis zum zweiten Leistungseckpunkt LE2 wird die Antriebsschaltungsanordnung mit "überhöhter" Antriebsleistung betrieben, so dass beispielsweise am ersten Leistungseckpunkt LE1 eine Leistung von 2600 kW von der Antriebsschaltkreisanordnung bereit gestellt wird, obwohl diese grundsätzlich für eine dauerhafte maximale Antriebsleistung von 2000 kW ausgelegt ist. Dies bedeutet, dass grundsätzlich eine Gefahr der Überhitzung verlustleistungsbehafteter Komponenten der Antriebsschaltkreisanordnung zu beachten wäre. Hier wird jedoch davon ausgegangen, dass der Geschwindigkeitsbereich um den ersten Leistungseckpunkt LE1 herum bei einer Beschleunigung des Schienenfahrzeuges zu höheren Geschwindigkeiten im Bereich des dritten Verlaufsabschnitts mit maximaler Antriebsleistung von 2000 kW derart schnell durchschritten wird, dass angesichts der vorliegenden Zeitkonstanten der verlustleistungsbehafteten Komponenten eine Überhitzung nicht auftreten kann.

Es wird darauf aufmerksam gemacht, dass der erste Verlaufsabschnitt nicht unbedingt konstant und der dritte Verlaufsabschnitt der Zugkraftkennlinie nicht notwendigerweise zu hohen Geschwindigkeiten hin weiter hyperbolisch bleiben muss. Auch andere Verläufe sind möglich.

Zur weiteren Veranschaulichung in den Figuren 1 und 2 dienen sogenannte Fahrwiderstandskennlinien, welche die zur Überwindung der unter anderem aerodynamischen Fahrwiderstände erforderlichen Zugkräfte in der Ebene (0‰) bzw. auf einer Steigung (25‰) angeben. Im Vergleich zur Zugkraftkennlinie wird ersichtlich, dass im Bereich des ersten Leistungseckpunktes LE1 große Zugkraftüberschüsse zur Verfügung stehen, die ein zügiges Durchfahren/Beschleunigen durch den Geschwindigkeitsbereich hoher Antriebsleistung ermöglichen.

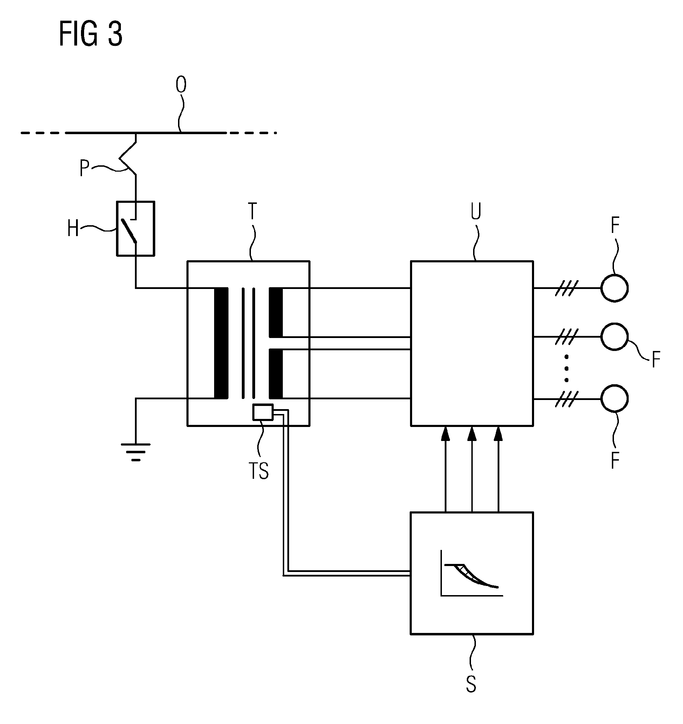

Figur 3 zeigt die allgemeine Schaltungsanordnung zu Steuerung einer Antriebsleistung bei einem Schienenfahrzeug. Von einer Oberleitung O aus über einen Pantographen P und einen Hauptschalter H erfolgt die Abnahme elektrischer Leistung aus einem Oberleitungsnetz. Ein Haupttransformator T weist Sekundärspulen auf, die elektrisch mit einem Umrichter U verbunden sind, welcher die erforderlichen Betriebsspannungen für Fahrmotoren F bereitstellt.

Der Umrichter U wird von einer zentralen Steuereinrichtung S gesteuert, die die von dem Umrichter U bereitzustellende Antriebsleistung bestimmt. In der Steuereinrichtung S ist die in der Figur 2 dargestellte Zugkraftkennlinie hinterlegt. Alternativ ist es auch möglich, dass die Zugkraftkennlinie in dem Umrichter U zur Verfügung steht.

Bei dem hier dargestellten Ausführungsbeispiel liefert jedoch die Steuereinrichtung S Sollwerte für den Umrichter U, unter anderem Werte für die bereitzustellende Zugkraft.

In der Steuereinrichtung S ist auch ein Überhitzungsschutz realisiert, so dass in dem in Figur 2 schraffierten Bereich eine Zugkraftreduzierung bei Bedarf vorgenommen werden kann.

Außerdem ist die Steuereinrichtung S mit einem Temperatursensor TS an dem Haupttransformator T verbunden. Der Temperatursensor TS kann wahlweise in Verbindung mit oder anstelle eines Temperaturmodells in der Steuereinrichtung S eingesetzt werden.

Insofern ist in der Steuereinrichtung S oder an anderer geeigneter Stelle innerhalb der Schaltungsanordnung eine Zugkraftbegrenzungseinrichtung vorgesehen, welche unterhalb von Abschalttemperaturen der verlustleistungsbehafteten Komponenten, hier dem Haupttransformator T, der Antriebsschaltung wirksam wird.

## Patentansprüche

1. Schienenfahrzeug mit einer elektrischen Antriebsschaltungsanordnung, die verlustleistungsbehaftete Komponenten aufweist, welche entsprechend einer gewünschten Zugkraftkennlinie dimensioniert sind, die durch die Abhängigkeit der von der Antriebsschaltungsanordnung zur Verfügung gestellten Zugkraft von einer Geschwindigkeit des Schienenfahrzeugs definiert ist und bei niedrigeren Geschwindigkeiten bis zu einem ersten Leistungseckpunkt (LE1) einen Verlaufsabschnitt mit allgemein zunehmender Antriebsleistung und bei Geschwindigkeiten jenseits des ersten Leistungseckpunktes (LE1) einen hyperbolischen Verlaufsabschnitt mit konstanter Antriebsleistung aufweist,
**dadurch gekennzeichnet, dass**
die Zugkraftkennlinie einen zweiten Leistungseckpunkt (LE1), der bei einer höheren Geschwindigkeit als der erste Leistungseckpunkt (LE1) liegt, aufweist und zwischen dem ersten Leistungseckpunkt (LE1) und dem zweiten Leistungseckpunkt (LE2) einen subhyperbolischen Verlaufsabschnitt mit von dem ersten zu dem zweiten Leistungseckpunkt (LE2) abnehmender Antriebsleistung zeigt, wobei der hyperbolische Verlaufsabschnitt jenseits des zweiten Leistungseckpunktes (LE2) liegt.

2. Schienenfahrzeug nach Anspruch 1,
**dadurch gekennzeichnet, dass**
die Antriebsschaltungsanordnung für eine Beschleunigung des Schienenfahrzeugs derart gesteuert ist, dass ein Geschwindigkeitsbereich um den ersten Leistungseckpunkt der Zugkraftkennlinie herum in einer solchen Zeit durchfahren wird, dass die verlustleistungsbehafteten Komponenten nicht überhitzt werden.

3. Schienenfahrzeug nach einem der Ansprüche 1 oder 2,
**dadurch gekennzeichnet, dass**
für den Geschwindigkeitsbereich um den ersten Leistungseckpunkt (LE1) der Zugkraftkennlinie herum eine Zugkraftbegrenzungseinrichtung vorgesehen ist, welche unterhalb von Abschalttemperaturen der verlustleistungsbehafteten Komponenten der Antriebsschaltung wirksam wird.

4. Schienenfahrzeug nach einem der Ansprüche 1 bis 3,
**dadurch gekennzeichnet, dass**
als verlustleistungsbehaftete Komponenten Transformatoren und/oder Drosseln eingesetzt sind.
